# EUROPEAN PATENT SPECIFICATION

(11) **EP 1 690 374 B1**
(45) Date of publication and mention of the grant of the patent: **21.06.2017**
(21) Application number: 04796127.1
(22) Date of filing: 22.10.2004
(51) Int. Cl.: H04L 29/06, H04W 12/08, H04W 12/02

(54) **MEDIUM ACCESS CONTROL ARCHITECTURE**
MEDIUMSZUGANGSSTEUERUNGS-ARCHITEKTUR
ARCHITECTURE DE COMMANDE D'ACCES AU SUPPORT (MAC)

(30) Priority: 27.10.2003 US 694063
(43) Date of publication of application: 16.08.2006
(73) Proprietor: Intel Corporation, Santa Clara, CA 95054 (US)
(72) Inventor: QI, Emily, Portland, OR 97229 (US); TSAI, Jr-Shian, Beaverton, OR 97006 (US); ELGEBALY, Hani, Beaverton, OR 97006 (US)
(74) Representative: Rummler, Felix
(86) International application number: PCT/US2004/035076
(87) International publication number: WO 2005/046136

(56) References cited:
- EP-A- 1 133 129
- EP-A2- 1 133 129
- US-A- 567 317

## Description

### Background

The extensive deployment and accelerated growth in the market for numerous wireless communications products and services have stimulated commensurate interest and activity in research and development directed to wireless communication technology. Rapid advances in the various wireless techniques have been reflected in modifications of, or extensions to, applicable protocol standards. For example, the IEEE 802.11 standard, applicable to WLAN (wireless local area network) technology, has undergone a number of modifications and extensions since the initial adoption of IEEE 802.11 in 1997. Corresponding standards and protocols applicable to other wireless technologies have been subject to similar evolutionary effects in product requirements.

As might be expected, vendors of wireless products are eager to incorporate into their products not only those features that are necessary to comply with evolving standards (i.e., table stakes) but also proprietary features by which those vendors might capture a competitive advantage. Heretofore, responses to evolving standard and the implementation of proprietary features have been effected primarily through design changes to hardware and/or associated device drivers. Consequently, realization of wireless protocol enhancements obliges vendors to pursue time-consuming and costly design changes in hardware devices and device drivers. As a result, the product-development cycle, which heretofore has been necessarily dependent on the release of hardware design changes, becomes protracted.

Accordingly, what is desired is the capacity to respond to standard and protocol changes in a manner that tends to minimize the product-development cycle and to promote greater flexibility and agility in a wireless product feature set. EP1133129A2 and US 5,657,317 describe a system for managing data flow over an open system interconnection type network which includes a physical layer and a media access control layer. A plurality of operating modules are implemented each enabling a respective media access control layer operating function in which at least a portion of the operating modules are implemented in software.

### SUMMARY OF THE INVENTION

The present invention is defined by the features of the independent claims. Preferred embodiments thereof are defined by features of the dependent claims.

### BRIEF DESCRIPTION OF THE DRAWINGS

The subject MAC (media access control) architecture may be better understood by, and its many features, advantages and capabilities made apparent to, those skilled in the art with reference to the Drawings that are briefly described immediately below and attached hereto, in the several Figures of which identical reference numerals (if any) refer to identical or similar elements, and wherein:
FIG. 1 is a block diagram of a MAC driver architecture in accordance with an embodiment of the invention.
FIG. 2 is a graphical representation of aspects of the 802.11 standard that are applicable to stations in a WLAN.
FIG. 3 is a system block diagram of a wireless computer system in accordance with an embodiment of the invention.

Skilled artisans appreciate that elements in Drawings are illustrated for simplicity and clarity and have not (unless so stated in the Description) necessarily been drawn to scale. For example, the dimensions of some elements in the Drawings may be exaggerated relative to other elements to promote and improve understanding of embodiments of the invention.

### DETAILED DESCRIPTION

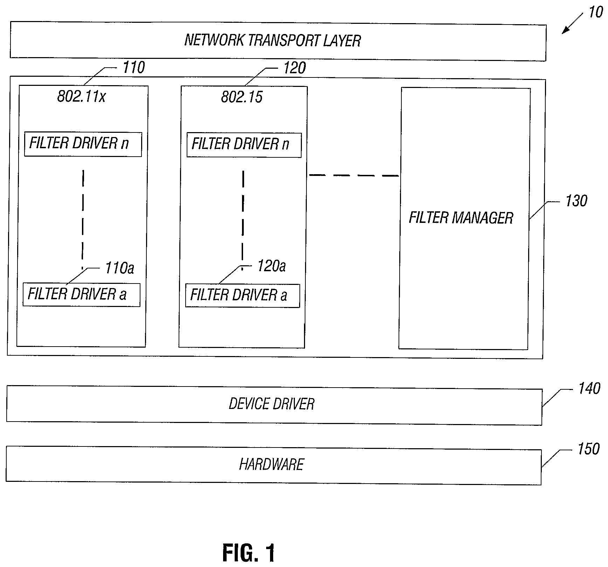

Referring now to FIG. 1, depicted therein is a block diagram of a MAC (Medium Access Control) architecture 10 in accordance with one embodiment of the invention. The MAC sublayer, implemented in one embodiment of the invention by MAC architecture 10, represents the lower of the two sublayers that constitute the data link layer that is defined in the OSI (Open Systems Interconnection) seven-layer reference model. The OSI reference model is applicable, inter alia, to wireless communications. LLC (Logical Link Control) forms the upper sublayer of the data link layer. The MAC layer is understood to be principally responsible for managing access to the PHY (physical) layer of the reference model.

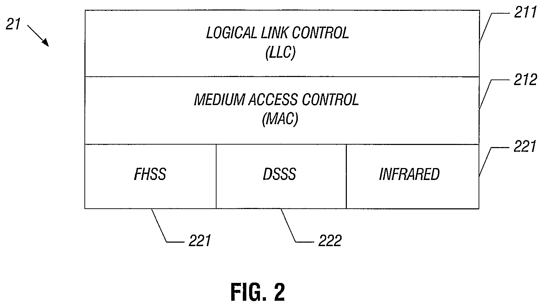

In this regard, FIG. 2 is a graphical depiction of the logical architecture of the 802.11x standard that is applicable to each station in a WLAN. (For purposes of this Description, the term "802.11x" is to be understood as a generic reference to any of the IEEE 802.11, 802.11a,..., 802.11i, etc. class of standards applicable to WLANs.) A "station" in a WLAN may be, for example, a notebook computer that is coupled to an access point. As seen in FIG. 2, the data link layer 21 comprises an upper LLC sublayer 211 and a lower sublayer, i.e., MAC layer 212. 802.11x accommodates multiple PHY layers: FHSS (frequency hopping spread spectrum) layer 221, DSSS (direct sequence spread spectrum) layer 222, and an infrared light layer 223. In general, the purpose of MAC layer 212 is to provide access control functions, such as addressing, access coordination, frame check sequence generation and checking, and LLC PDU (protocol data unit) delimiting, for shared-medium PHYs in support of the LLC layer. To this end, the MAC layer performs the addressing and recognition of frames in support of the LLC. The 802.11 standard uses CSMA/CA (carrier sense multiple access with collision avoidance). It is not possible to both transmit and receive on the same channel using radio transceivers.

Returning now to FIG. 1, as depicted herein, MAC architecture 10, in one embodiment of the invention, may comprise a plurality of filter chains, exemplified by filter chain 110 and filter chain 120. Although two filter chains are illustrated in FIG. 2, the invention contemplates any number of filter chains, according to system requirements and the judicious exercise of discretion by the designer. Each filter chain, in turn, may comprise a number of filter drivers. For example, in one embodiment of the invention, filter chain 110 comprises a plurality of filter drivers 110a, ..., 110n. Similarly, filter chain 120 may comprise a plurality of filter drivers 120a, ..., 120n. (Be aware that invention is not defined by the number of filter drivers that constitute a respective filter chain. Nor does the number of filter drivers in a particular filter chain need to be equal, or bear any other relationship, to the number of filter drivers in any other filter chain.) In general, for purposes of this Detailed Description, the filter drivers may be understood to be software filters (i.e., programs) that are constructed from programming code. Each filter driver, or features within a driver, accepts an input that has predefined characteristics, transforms the input in a predetermined manner, then writes an output to the succeeding stage, which stage may itself be a filter driver. Also for purposes of this Detailed Description, a filter chain may be considered to comprise an aggregation or combination of individual filters that are intended to be sequentially executed. In general, completion of the execution of one filter in the chain is followed by the execution of another, until the execution of the last filter to be executed.

In accordance with one embodiment of the invention, each filter chain is constructed from number of filter drivers that are effective to perform MAC processing that is applicable to a particular wireless medium. For example, in the embodiment of FIG. 1, filter chain 110 is illustrated to be constructed of filter drivers that are appropriate to the processing of a WLAN medium, in compliance, for example, with the above-referenced IEEE 802.11 standard. Similarly, filter chain 120 is illustrated in FIG. 1 to be constructed of a number of filter drivers 120a, ..., 120n that are appropriate to processing a wireless PAN (personal area network) medium in compliance with the proposed IEEE 802.15 standard, for example. Similarly, other PAN media, such as BLUETOOTH^{™} and HomeRF^{™}, for example, may be accommodated by filter chain 120, or for some other filter chain in MAC framework 10. (For present purposes, the term "medium" (or "media") is to be understood as referring to, or including, *inter alia*, a protocol, wherein a protocol, in turn, comprises a set of rules applicable to the exchange of data (or other information) between two or more facilities or entities. In accordance with one embodiment of the invention, MAC architecture 10 contemplates coexistence in the same device of a number of disparate filter chains, wherein each filter chain may be addressed to a particular class of wireless communication technology, WLAN, WPAN, cellular systems (1G, 2G, 3G, etc.), and so forth.

With respect to the filter drivers in a respective filter chain (for example, filter drivers 110a, ..., 110n in filter chain 110), each filter driver may be viewed as a loadable building block. That is to say, with respect to filter chain 110, filter driver 110a, in one embodiment, may be a software filter that is designed to perform, for example, fragmentation/assembly processing in accordance with an IEEE 802.11 WLAN. Similarly, filter driver 110b, in one embodiment, may be a software filter that is designed to perform encryption/decryption processing for an IEEE 802.11 WLAN medium. That is, each filter driver in filter chain 110 is based on a MAC primitive that is applicable to the MAC processing in an IEEE 802.11 medium. Similarly, filter drivers 120a, ..., 120n in filter chain 120 implement corresponding MAC primitives that are applicable to an IEEE 802.15 PAN medium, for example.

For example, the 802.11 MAC sublayer may be decomposed into the following primitives: MLME (MAC subLayer Management Entity, MPDU (MAC Protocol Data Unit) Preparation, Power Management and Monitors. MLME, in turn, comprises Authentication, Association, and Management Control primitives. MPDU Preparation, in turn, comprises, 802.11 to 802.3 Conversion (and the reverse), Encryption/Decryption, and Fragmentation/Reassemble primitives. Power Management and Monitor comprises Power-Saving Filter (for the access point), Power Monitoring, and Power Management (based on network usage)primitives. Accordingly, filter chain 110, when configured for MAC processing in an IEEE 802.11 medium, will comprise a number of filter drivers that implement some or all the above reference primitives.

A notable advantage derives from the arrangement of filter chains described herein. Because a substantial quantum of MAC processing is allocated to and performed in the filter chains by building-block filter drivers, the device driver 140, illustrated in FIG. 1, may be largely restricted to interfacing with, and controlling the operation of, the associated hardware device 150. That is to say, functionality that in preexisting MAC architectures had been resident in a miniport driver may be, in one embodiment of the invention, allocated to an appropriate filter driver in a filter chain.

A salient aspect of the MAC architecture 10, as described immediately above, is a construction that is characterized by a number of dynamically configurable filter chains. The filter chains are themselves assembled from discrete building blocks (filter drivers) in manner that is effective to perform the MAC services that are applicable to the wireless medium at hand, as that medium is defined by applicable standards and/or protocols. The MAC architecture is, in large part, rendered dynamically configurable by virtue of a filter manager 130.

Specifically, in one embodiment of the invention, MAC architecture 10 may comprise a filter manager 130. The functionality of the filter drivers may be effectuated through the operation of filter manager 130. In one embodiment, filter manager 130 may operate to query a filter chain for information regarding the data types at the filter chain input and output. Filter manager 130 may also issue queries for information characterizing the properties of the filter chain, particularly, the hardware and software requirements of a filter chain, as established by the operating environment. Based on the information provided, filter manager 130 may assemble an appropriate filter chain.

For example, in one embodiment of the invention, filter manager 130 queries an interface of each filter driver to obtain the respective properties of the filter driver. Filter manager 130 then creates and maintains a sequence table in respect of each filter driver. The filter chain may then be constructed upon completion of matching analysis by filter manager 130. The matching analysis matches the characteristics of input data to the respective properties of the filter drivers. In one embodiments of the invention, filter drivers may be stored in the device operating system, and filter chains may constructed during creation of the device driver stack.

As indicated above, each filter chain is assembled in a manner that is appropriate to the processing of a particular wireless medium. Therefore, the filter chains that populate a MAC architecture 10 will be distinguishable in accordance with a respective target medium. However, in some embodiments, commonality may obtain with respect to discrete filter drivers. That is, identical, or at least substantially similar, filter drivers may be deployed in disparate filter chains. (Be aware that the filter drivers per se, including the techniques by which they are created, do not constitute an aspect, or limitation, of the subject inventions).

Furthermore, filter manager 130 controls the operation of the filter chains so that the filter chains may be caused to operate in one of a number of modes: Stop, Pause, and Run, for example, as defined immediately below.

Stop Mode: Stop is an idle mode. That is, there is no send and receive processing the Stop mode. A filter chain may transition from stop mode to Pause when an Initializing function is called. The filter chain can enter the Stop mode from Pause mode when a De-Initializing function is called.

Pause Mode: In the Pause mode, filter chains may be available either to perform send/receive processing or to compiles all send/receive operations that are required to terminate processing. The filter chain can enter the Pause mode either from Stop mode, when the Initializing function is called, or from Run mode, when a Pausing function is called. The filter chain may transition from Pause mode to Run mode when a Restarting/Starting function is called or to Stop mode when the De-initializing function is called.

Run Mode: In the Run mode, filter chains can send and receive processing. A filter chain can enter Run mode from Pause mode when the function is called. A filter chain can leave transition from Run mode to Pause mode when a Pausing function is called.

Understand that the functions (Initializing, De-Initializing, Starting/Restarting, and Pause) are not aspects of the invention and are susceptible to definitions imposed by system or device designers.

In one embodiment of the invention, inclusion of filter manager 130 contributes to the operational agility that obtains as a result of MAC architecture 10. For example, filter manager 130 operates to dynamically configure (and reconfigure) filter chains by removing filter drivers form, and inserting filter drivers into, respective filter chains. That is, as a hardware device is called upon to operate in the context of a specific wireless medium, e.g., 802.11x, filter manager 130 will assemble an appropriate filter chain from the necessary filter drivers. At a subsequent point in time, the wireless hardware device may be called on to process a different wireless medium, e.g., HomeRF^{™}. Filter manager 130 will then operate to assemble the filter chain, from appropriate filter drivers, that is required to process the then-prevailing wireless medium.

FIG. 4 is a block diagram of a representative data processing system, namely computer system 300 with which embodiments of the invention may be used. For example, computer system 300 may constitute a notebook computer that may communicate with other such computers in a peer-to-peer mode. Alternatively, notebook computers may communicate through an access point. In one embodiment, computer system 300 includes a processor 310, which may include a general-purpose or special-purpose processor such as a microprocessor, microcontroller, application specific integrated circuit (ASIC), a programmable gate array (PGA), and the like.

The processor 310 may be coupled over a host bus 315 to a memory hub (i.e., a memory controller) 330 in one embodiment, which may be coupled to a system memory 320 via a memory bus 325. The memory hub 330 may also be coupled over an Advanced Graphics Port (AGP) bus 333 to a video controller 335, which may be coupled to a display 337. The AGP bus 333 may conform to the Accelerated Graphics Port Interface Specification, Revision 2.0, published May 4, 1998, by Intel Corporation, Santa Clara, California.

Memory hub 330 may control the transfer of information within system 300, e.g., between processor 310, memory hub 330, and memory 320. That is, memory hub 330 may generate control signals, address signals, and data signals that may be associated with a particular write or read operation to memory 320.

In some embodiments, memory hub 330 may be integrated with processor 310 and/or with memory 320. In alternate embodiments, memory hub 330 may be a discrete component or dedicated chip. In other embodiments, portions of the functionality of memory hub 330 may be implemented in processor 310 or in memory 320 as, for example, a software application, module, or routine.

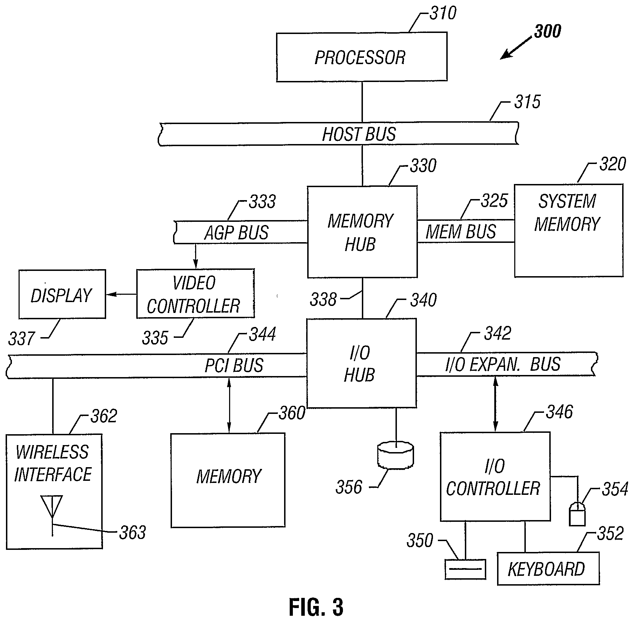

The memory hub 330 may also be coupled (via a hub link 338) to an input/output (I/O) hub 340 that is coupled to a input/output (I/O) expansion bus 342 and a Peripheral Component Interconnect (PCI) bus 344, as defined by the PCI Local Bus Specification, Production Version, Revision 2.1 dated in June 1995, or alternately a bus such as the PCI Express bus, or another third generation I/O interconnect bus. The I/O expansion bus 342 may be coupled to an I/O controller 346 that controls access to one or more I/O devices. As shown in FIG. 3, these devices may include in one embodiment storage devices, such as a floppy disk drive 350 and input devices, such as keyboard 352 and mouse 354. The I/O hub 340 may also be coupled to, for example, a hard disk drive 356 as shown in FIG. 3. It is to be understood that other storage media may also be included in the system. In an alternate embodiment, the I/O controller 346 may be integrated into the I/O hub 340, as may other control functions.

The PCI bus 344 may be coupled to various components including, for example, a flash memory 360 which may include the structure shown in the block diagram of FIG. 1. Further shown in FIG. 3 is a wireless interface 362 coupled to the PCI bus 344, which may be used in certain embodiments to communicate with remote devices. As shown in FIG. 3, wireless interface 362 may include a dipole or other antenna 363 (along with other components not shown in FIG. 3). In various embodiments, wireless interface 362 may be coupled to system 300, which may be a notebook personal computer, via an external add-in card, or an embedded device. In other embodiments wireless interface 362 may be fully integrated into a chipset of system 300.

Although the description makes reference to specific components of the system 300, it is contemplated that numerous modifications and variations of the described and illustrated embodiments may be possible. Moreover, while FIG. 3 shows a block diagram of a system such as a notebook personal computer, it is to be understood that embodiments of the present invention may be implemented in another wireless device such as a cellular phone, personal digital assistant (PDA) or the like. In such embodiments, a flash memory in accordance with an embodiment may be coupled to an internal bus which is in turn coupled to a microprocessor and a peripheral bus, which may in turn be coupled to a wireless interface and an associated antenna such as a dipole antenna, helical antenna, global system for mobile communication (GSM) antenna, and the like.

In addition, embodiments of the invention may be realized in software (or in the combination of software and hardware) that may be executed on a host system, such as, for example, a computer system, a wireless device, or the like. Accordingly, such embodiments may comprise an article in the form of a machine-readable storage medium onto which there are written instructions, data, etc. that constitute a software program that defines at least an aspect of the operation of the system. The storage medium may include, but is not limited to, any type of disk, including floppy disks, optical disks, compact disk read-only memories (CD-ROMs), compact disk rewritables (CD-RWs), and magnetooptical disks, and may include semiconductor devices such as read-only memories (ROMs), random access memories (RAMs), erasable programmable read-only memories (EPROMs), electrically erasable programmable read-only memories (EEPROMs), flash memories, magnetic or optical cards, or any type of media suitable for storing electronic instructions. Similarly, embodiments may be implemented as software modules executed by a programmable control device, such as a computer processor or a custom designed state machine.

Accordingly, from the Description above, it should be abundantly clear there has been presented herein a substantial advance in the implementation of MAC layers for wireless communication applications. To wit: the invention enables venders of wireless communications products to rapidly respond to evolving wireless protocol requirements, thereby substantially reducing the product-development cycle and associated time-to-market. Furthermore, the embodiments of the invention enable wireless communication hardware devices to be dynamically adaptable to a wide range of wireless media.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. An apparatus comprising:
a first filter chain (110) to process a first wireless medium;
a second filter chain (120) to process a second wireless medium; and
a filter manager (130) to obtain respective properties of filter drivers (110a-110n, 120a-120n), match the characteristics of input data to respective properties of filter drivers, and build the first filter chain and the second chain upon completion of matching,
wherein the filter manager is operable to dynamically remove filter drivers from, and insert filter drivers into, the first or second filter chain,
wherein each filter driver in the first or second filter chain implements media access control primitives, and
wherein the input data comprises the input data at the filter chain input or at each filter driver input.

2. An apparatus as defined in claim 1, further comprising: a device driver (140) to operate a hardware device (150).

3. An apparatus as defined in claim 2, wherein operation of the device driver (140) is restricted to implementation of an interface to the hardware device (150) and control of hardware device operation.

4. An apparatus as defined in claim 1, wherein the first filter chain (110) comprises a first plurality of filter drivers to process the first wireless medium and the second filter chain (120) comprises a second plurality of filter drivers to process the second wireless medium.

5. An apparatus as defined in claim 4, wherein the first plurality of filter drivers implement media access control primitives corresponding to the first wireless medium and the second plurality of filter drivers implement media access control primitives corresponding to the second wireless medium.

6. An apparatus as defined in claim 5, wherein the first plurality of filter drivers comprises a filter driver to implement encryption/decryption function for the first wireless medium and the second plurality of filter drivers comprises a filter driver to implement encryption/decryption for the second wireless medium.

7. An apparatus as defined in claim 5, wherein the first chain of filter drivers comprises a filter driver to implement fragmentation/assembling function for the first wireless medium and the second chain of filter drivers comprises a filter driver to implement fragmentation/assembling for the second wireless medium.

8. An apparatus as defined in claim 1 or 4, wherein the filter chains (110, 120) are operable in a run mode, a stop mode and a pause mode.

9. A method comprising:
obtaining respective properties of filter drivers;
matching the characteristics of input data to the respective properties of the filter drivers, and upon completion of matching assembling a first filter chain (110) to process a first wireless medium, assembling a second filter chain (120) to process a second wireless medium, and dynamically removing filter drivers from, and inserting filter drivers into the first or second filter chain,
wherein each filter driver in the first or second filter chain implements media access control primitives, and
wherein the input data comprises the input data at the filter chain input or at each filter driver input.

10. A method as defined in claim 9, wherein the filter chains are assembled so that the first filter chain (110) comprises filter drivers that implement media access control primitives that correspond to the first wireless medium and the second filter chain (120) comprises filter driver primitives that correspond to the second wireless medium.

11. An article comprising a machine-readable storage medium containing instructions that, if executed, enable a system to perform the method of any one of claims 9 or 10.

## Patentansprüche

1. Vorrichtung, die Folgendes umfasst:
eine erste Filterkette (110), um ein erstes drahtloses Medium zu verarbeiten;
eine zweite Filterkette (120), um ein zweites drahtloses Medium zu verarbeiten; und
einen Filter-Manager (130), um jeweilige Eigenschaften von Filtertreibern (110a-110n, 120a-120n) zu erhalten, die Eigenschaften der Eingangsdaten an die jeweiligen Eigenschaften der Filtertreiber anzupassen und beim Abschluss der Anpassung die erste Filterkette und die zweite Filterkette aufzubauen,
wobei der Filter-Manager betreibbar ist, Filtertreiber dynamisch aus der ersten oder der zweiten Filterkette zu entfernen und Filtertreiber dynamisch in die erste oder die zweite Filterkette einzufügen,
wobei jeder Filtertreiber in der ersten oder der zweiten Filterkette Medienzugriffs-Steuergrundelemente implementiert und
wobei die Eingangsdaten die Eingangsdaten am Filterketteneingang oder an jedem Filtertreibereingang umfassen.

2. Vorrichtung nach Anspruch 1, die ferner Folgendes umfasst:
einen Vorrichtungstreiber (140), um eine Hardware-Vorrichtung (150) zu betreiben.

3. Vorrichtung nach Anspruch 2, wobei der Betrieb des Vorrichtungstreibers (140) auf die Implementierung einer Schnittstelle zu der Hardware-Vorrichtung (150) und die Steuerung des Betriebs der Hardware-Vorrichtung eingeschränkt ist.

4. Vorrichtung nach Anspruch 1, wobei die erste Filterkette (110) erste mehrere Filtertreiber umfasst, um das erste drahtlose Medium zu verarbeiten, und die zweite Filterkette (120) zweite mehrere Filtertreiber umfasst, um das zweite drahtlose Medium zu verarbeiten.

5. Vorrichtung nach Anspruch 4, wobei die ersten mehreren Filtertreiber Medienzugriffs-Steuergrundelemente, die dem ersten drahtlosen Medium entsprechen, implementieren und die zweiten mehreren Filtertreiber Medienzugriffs-Steuergrundelemente, die dem zweiten drahtlosen Medium entsprechen, implementieren.

6. Vorrichtung nach Anspruch 5, wobei die ersten mehreren Filtertreiber einen Filtertreiber umfassen, um eine Verschlüsselungs-/Entschlüsselungsfunktion für das erste drahtlose Medium zu implementieren, und die zweiten mehreren Filtertreiber einen Filtertreiber umfassen, um eine Verschlüsselungs-/Entschlüsselungsfunktion für das zweite drahtlose Medium zu implementieren.

7. Vorrichtung nach Anspruch 5, wobei die erste Kette von Filtertreibern einen Filtertreiber umfasst, um eine Fragmentierungs-/Assemblierungsfunktion für das erste drahtlose Medium zu implementieren, und die zweite Kette von Filtertreibern einen Filtertreiber umfasst, um eine Fragmentierung/Assemblierung für das zweite drahtlose Medium zu implementieren.

8. Vorrichtung nach Anspruch 1 oder 4, wobei die Filterketten (110, 120) in einem Laufmodus, einem Stoppmodus und einem Pausenmodus betreibbar sind.

9. Verfahren, das Folgendes umfasst:
Erhalten jeweiliger Eigenschaften von Filtertreibern;
Anpassen der Eigenschaften der Eingangsdaten an die jeweiligen Eigenschaften der Filtertreiber und beim Abschluss des Anpassens
Assemblieren einer ersten Filterkette (110), um ein erstes drahtloses Medium zu verarbeiten,
Assemblieren einer zweiten Filterkette (120), um ein zweites drahtloses Medium zu verarbeiten, und
dynamisches Entfernen von Filtertreibern aus der ersten oder der zweiten Filterkette und dynamisches Einfügen von Filtertreibern in die erste oder die zweite Filterkette,
wobei jeder Filtertreiber in der ersten oder der zweiten Filterkette Medienzugriffs-Steuergrundelemente implementiert und
wobei die Eingangsdaten die Eingangsdaten an dem Filterketteneingang oder an jedem Filtertreibereingang umfassen.

10. Verfahren nach Anspruch 9, wobei die Filterketten so assembliert werden, dass die erste Filterkette (110) die Filtertreiber umfasst, die die Medienzugriffs-Steuergrundelemente implementieren, die dem ersten drahtlosen Medium entsprechen, und die zweite Filterkette (120) die Filtertreiber-Grundelemente umfasst, die dem zweiten drahtlosen Medium entsprechen.

11. Artikel, der ein maschinenlesbares Speichermedium umfasst, das Anweisungen enthält, die, falls sie ausgeführt werden, es einem System ermöglichen, das Verfahren nach einem der Ansprüche 9 oder 10 auszuführen.

## Revendications

1. Appareil comprenant :
une première chaîne de filtres (110) pour traiter un premier support sans fil ;
une seconde chaîne de filtres (120) pour traiter un second support sans fil ; et
un gestionnaire de filtres (130) pour obtenir des propriétés respectives de pilotes de filtres (110a-110n, 120a-120n), adapter les caractéristiques de données d'entrée à des propriétés respectives de pilotes de filtres, et construire la première chaîne de filtres et la seconde chaîne au terme de l'adaptation,
dans lequel le gestionnaire de filtres est exploitable pour supprimer dynamiquement des pilotes de filtres de la première ou de la seconde chaîne de filtres ou en insérer dynamiquement dans celle-ci, et
dans lequel chaque pilote de filtre dans la première ou seconde chaîne de filtres met en oeuvre des primitives de commande d'accès au support, et
dans lequel les données d'entrée comprennent les données d'entrée au niveau de l'entrée de la chaîne de filtres ou au niveau de l'entrée de chaque pilote de filtre.

2. Appareil selon la revendication 1, comprenant en outre :
un pilote de dispositif (140) pour exploiter un dispositif matériel (150).

3. Appareil selon la revendication 2, dans lequel l'exploitation du pilote de dispositif (140) est limitée à la mise en oeuvre d'une interface avec le dispositif matériel (150) et la commande du fonctionnement du dispositif matériel.

4. Appareil selon la revendication 1, dans lequel la première chaîne de filtres (110) comprend une première pluralité de pilotes de filtres pour traiter le premier support sans fil et la seconde chaîne de filtres (120) comprend une seconde pluralité de pilotes de filtres pour traiter le second support sans fil.

5. Appareil selon la revendication 4, dans lequel la première pluralité de pilotes de filtres met en oeuvre des primitives de commande d'accès au support correspondant au premier support sans fil et la seconde pluralité de pilotes de filtres met en oeuvre des primitives de commande d'accès au support correspondant au second support sans fil.

6. Appareil selon la revendication 5, dans lequel la première pluralité de pilotes de filtres comprend un pilote de filtre pour mettre en oeuvre une fonction de cryptage/décryptage pour le premier support sans fil et la seconde pluralité de pilotes de filtres comprend un pilote de filtre pour mettre en oeuvre un cryptage/décryptage du second support sans fil.

7. Appareil selon la revendication 5, dans lequel la première chaîne de pilotes de filtres comprend un pilote de filtre pour mettre en oeuvre une fonction de fragmentation/d'assemblage pour le premier support sans fil et la seconde chaîne de pilotes de filtres comprend un pilote de filtre pour une fragmentation/un assemblage du second support sans fil.

8. Appareil selon la revendication 1 ou 4, dans lequel les chaînes de filtres (110, 120) sont exploitables dans un mode d'exécution, un mode d'arrêt et un mode de pause.

9. Procédé comprenant :
l'obtention de propriétés respectives de pilotes de filtres ;
l'adaptation des caractéristiques de données d'entrée aux propriétés respectives des pilotes de filtres, et au terme de l'adaptation l'assemblage d'une première chaîne de filtres (110) pour traiter un premier support sans fil, l'assemblage d'une seconde chaîne de filtres (120) pour traiter un second support sans fil, et
l'élimination dynamique de pilotes de filtres de la première ou de la seconde chaîne de filtres ou leur insertion dynamique dans celle-ci, et
dans lequel chaque pilote de filtre dans la première ou seconde chaîne de filtres met en oeuvre des primitives de commande d'accès au support, et
dans lequel les données d'entrée comprennent les données d'entrée au niveau de l'entrée de la chaîne de filtres ou au niveau de l'entrée de chaque pilote de filtre.

10. Procédé selon la revendication 9, dans lequel les chaînes de filtres sont assemblées de telle sorte que la première chaîne de filtres (110) comprenne des pilotes de filtres qui mettent en oeuvre des primitives de commande d'accès au support qui correspondent au premier support sans fil et la seconde chaîne de filtres (120) comprend des primitives de pilote de filtre qui correspondent au second support sans fil.

11. Article comprenant un support de mémorisation lisible par machine contenant des instructions qui, à leur exécution, permettent à un système d'exécuter le procédé selon l'une quelconque des revendications 9 ou 10.
